# FASCICULE DE BREVET EUROPEEN

(11) **EP 3 529 345 B1**
(45) Date de publication et mention de la délivrance du brevet: **25.11.2020**
(21) Numéro de dépôt: 17791036.1
(22) Date de dépôt: 20.10.2017
(51) Int. Cl.: C11D 7/50, C09D 9/00, C11D 11/00, C11D 17/00, C11D 3/384, C11D 3/22, C11D 3/43

(54) **GEL AQUEUX NEUTRE ET PROCÉDÉ DE TRAITEMENT DE SURFACE LE METTANT EN OEUVRE**
NEUTRALES WÄSSRIGES GEL UND VERFAHREN ZUR OBERFLÄCHENBEHANDLUNG DAMIT
NEUTRAL AQUEOUS GEL AND SURFACE TREATMENT METHOD USING SAME

(30) Priorité: 20.10.2016 FR 1660204
(43) Date de publication de la demande: 28.08.2019
(73) Titulaire: Franc, Cécile, 30390 Aramon (FR)
(72) Inventeur: Franc, Cécile, 30390 Aramon (FR)
(86) Numéro de dépôt international: PCT/EP2017/076917
(87) Numéro de publication internationale: WO 2018/073444

(56) Documents cités:
- EP-A1- 0 442 271
- WO-A1-01/21719
- US-A1- 2009 093 390

## Description

### DOMAINE TECHNIQUE DE L'INVENTION

La présente invention vise un gel à base aqueuse contenant au moins un solvant organique et utilisé pour le traitement curatif ou préventif des surfaces, et des procédés de traitement mettant ce gel en œuvre. Elle s'applique, en particulier, pour éliminer un graffiti sur une surface solide ou protéger une surface des graffitis. Certains de ces gels à base aqueuse peuvent par ailleurs être utilisés dans différents domaines (cosmétique, alimentaire, pharmaceutique, etc).

### ETAT DE LA TECHNIQUE

Les graffitis sont aujourd'hui retirés de différentes manières, et encore trop souvent avec des produits CMR (Cancérigène, Mutagène, Reprotoxique) ou sensibilisants. Des produits dits « écologiques » émergent néanmoins. Cependant ils sont peu, voire pas actifs. Par ailleurs, de nombreux solvants organiques industriels sont bien connus dans le domaine de la peinture pour leur action diluante, décapante. Cependant, il faut permettre à ces solvants d'agir, en particulier avoir un temps de contact suffisant entre la composition et la surface à traiter pour que l'action puisse se faire. Une solution avantageuse est d'appliquer ce solvant sous forme de gel pour qu'il ne coule pas, en particulier sur les surfaces verticales.

Des gels de solvants organiques ou de mélanges de solvants organiques sont décrits dans les brevets FR2737218, FR2249933, FR3027310, WO9909734, US6057276. Aucun de ces gels n'est à base aqueuse ; pourtant les intérêts d'une base aqueuse sont multiples. Par exemple, et sans que cette liste ne soit limitative, une base aqueuse permet un lavage à l'eau des outils, un coût et un impact sur l'environnement réduit.

Des détergents pour l'élimination de peintures et de laques ont été décrits dans le brevet EP2045320. Cependant, il ne s'agit pas de gel, et dès lors ces produits ne présentent pas les propriétés liées au caractère gel précédemment décrit.

Des gels aqueux contenant des solvants ont été décrits pour le traitement des graffitis ; tel que décrit dans le brevet US 2009/0093390 cependant ces gels sont très alcalins (soude 2M) et dès lors incompatibles avec de nombreux matériaux car ils les détériorent. Ainsi, 'les nettoyages avec des bases (pH 9 à 14) ou des acides (pH 1 à 5) sont proscrits' pour le traitement des monuments historiques.

Il y a donc un besoin pour un produit ou une famille de produit efficaces respectueux des hommes et de l'environnement. Les principales contraintes des utilisateurs de ces produits sont les suivantes :
- pas ou peu d'impact résiduel sur le matériau traité,
- pouvoir traiter avec un même produit un large spectre de matériaux,
- pas ou peu de dépendance à la météo pour pouvoir utiliser le produit (température, hygrométrie relative, vent).

Il existe également un besoin de traitement des graffitis récents (relativement faciles à enlever) ainsi que des graffitis plus anciens et incrustés dans les matériaux. Dans le premier cas, un temps de contact de quelques minutes est suffisant, et dès lors un gel permettant de former une épaisseur de 1 à 2 mm sur une surface verticale est efficace. Pour des graffitis anciens incrustés par le soleil et les intempéries, il est nécessaire d'avoir un gel plus épais, qui puisse être appliqué sur une épaisseur de 3 à 5 mm sur des surfaces verticales sans couler. Ceci permet un temps de contact sans sécher plus long et de l'ordre d'une à deux heures.

Il existe également un besoin d'un produit qui puisse être rincé à l'eau et stable dans le temps, sur au moins 6 mois.

Il existe en outre dans d'autres secteurs (pharmacie, cosmétique, alimentaire) un besoin d'avoir des gels aqueux neutres contenant des solvants organiques et/ou des huiles organiques et constituant une alternative aux solutions existantes, en particulier pour leur compatibilité potentielle avec les principes actifs à délivrer dans les deux premiers domaines.

### OBJET DE L'INVENTION

La présente invention vise à apporter une solution à tout ou partie de ces inconvénients.

Un premier objet de l'invention concerne un gel à base aqueuse possédant un pH apparent compris entre 5 et 9 caractérisé en ce qu'il comprend :
- 10 à 70 % en poids par rapport au poids total du gel d'au moins un solvant organique et/ ou une huile organique,
- 0,5 à 4,5%, de préférence de 1 à 4 %, de manière particulièrement préférée de 1 à 3%, en poids par rapport au poids total du gel de cellulose microcristalline,
- 0,5 à 3 % en poids par rapport au poids total du gel de caséine et
- au moins 25 % en poids par rapport au poids total du gel d'eau.

Tous les pourcentages indiqués dans ce document sont des pourcentages massiques exprimés par rapport à la masse totale finale du gel.

De façon surprenante, il n'est pas nécessaire de faire un quelconque traitement préalable à cette cellulose microcristalline. Par exemple, on peut utiliser la cellulose Avicel® PH 101

(FMC, marques déposées), ou la cellulose Arbocel P4000 (J. Rottenmaier & Sohne GMBH, marques déposées) ou la cellulose Vivapur Cos 8 (J. Rottenmaier & Sohne GMBH, marques déposées) ou la cellulose Vivapur Cs Wet wipes (J. Rottenmaier & Sohne GMBH, marques déposées).

Toutes les préparations objets de l'invention sont des gels, c'est-à-dire qu'ils ont des propriétés rhéologiques qui leur permettent de ne pas s'épandre lorsqu'ils sont déversés sur une surface plane et de ne pas couler lorsqu'ils sont appliqués sur une surface inclinée ou verticale. Cette propriété est essentielle pour traiter les surfaces et augmenter significativement les temps de contacts par rapport à une préparation qui s'épandrait ou qui coulerait.

La forme gel présente les avantages multiples suivants :
- en terme de lavage (à l'eau) des outils de mise en œuvre et des surfaces
- en terme de sécurité du gel et de sa préparation
- en terme de coût du gel
- en terme de quantité moindre de solvant au contact des utilisateurs et dans l'environnement
- en terme d'efficacité du solvant sur la surface.

On entend par gel neutre un gel dont le pH apparent est compris entre 5 et 9. Le pH apparent du gel est la valeur obtenue par lecture directe avec une électrode en verre ou à l'aide d'un indicateur coloré de papier pH ou encore par toute autre méthode.

Dans des modes de réalisation, le gel présente un pH apparent compris entre 6 et 8.

De manière préférentielle, le gel contient au moins 40% d'eau.

De manière préférentielle, les solvants organiques sont choisis parmi les solvants organiques industriels.

Dans la suite du texte, on entendra par solvant non miscible à l'eau tout solvant qui, lorsqu'il est mélangé à 25°C à un volume égal d'eau présente après décantation deux phases distinctes de mêmes volumes ou de volumes différents.

Dans des modes de réalisation, les solvants organiques sont choisis parmi les solvants organiques non miscibles à l'eau.

Dans des modes de réalisation, les solvants organiques industriels miscibles à l'eau sont choisis parmi les solvants polaires protiques ou aprotiques.

Dans des modes de réalisation, les solvants organiques industriels non miscibles à l'eau sont choisis parmi les solvants polaires ou non polaires.

Dans des modes de réalisation, les solvants organiques sont :
- des alcools, par exemple et sans que cette liste ne soit exhaustive le méthanol, l'éthanol, le 2-propanol, le 2-éthylhexanol, le butyl glycol, le tert-amyl alcool, le 1-butanol, le 2-butanol, le glycerol, le N-pentanol, le butyl diglycol
- des cétones, telles l'acétone, la Méthyl Ethyl Cétone (MEC), la cyclohexanone
- des solvants soufrés tels le DiMéthyl SulfOxyde (DMSO) et le sulfolane
- des éthers, tels le 1,3-dioxolane, le Méthyl Ter-Butyl Éther (MTBE), l'éther diéthylique, le butyl diglycol éther
- des esters par exemple et sans que cette liste ne soit exhaustive l'acétate d'éthyle, l'acétate de butyle, l'acétate d'isobutyle, l'acétate d'isoamyle, le butylglycolacétate, le butyldiglycolacétate, l'acétate de 2-ethylhexyle, le diglycol, le 2-(1-methoxy)-propylacétate, le glycerol triacétate, le succinate de diméthyle, le glutarate de diméthyle, l'adipate de diméthyle
- des alcanes, par exemple et sans que cette liste ne soit exhaustive le squalane, l'heptane, l'hexane, le cyclohexane ou des mélanges tels l'essence pour voiture, le diesel, le kerosène
- des solvants chlorés, bien que ceux-ci ne soit pas préférés pour des raisons environnementales ; on cite, par exemple, du dichlorométhane
et leurs mélanges.

Dans des modes de réalisation, le gel contient entre 10 et 70 % d'un solvant ou d'un mélange de solvants organiques, de préférence encore entre 20 et 60% d'un solvant ou d'un mélange de solvants organiques.

Dans des modes de réalisation, le gel contient jusqu'à 35 % de solvants organiques miscibles à l'eau.

Dans des modes de réalisation, le gel contient jusqu'à 70% de solvants organiques non miscibles à l'eau, de préférence encore jusqu'à 60% de solvants organiques non miscibles à l'eau.

Dans des modes de réalisation, la taille des particules de cellulose microcristalline est en moyenne inférieure à 100 micromètres, de préférence inférieures à 10 micromètres.

Dans des modes de réalisation, le gel selon l'invention peut comprendre un ou plusieurs autres polysaccharides que la cellulose microcristalline.

Dans des modes de réalisation, le ou les polysaccharides additionnels est(sont) choisi(s) parmi l'hémicellulose, la pectine, la lignine, les gommes, l'amidon, la fécule, la dextrine, la carboxyméthylcellulose, en particulier la carboxyméthylcellulose sodique.

Dans des modes de réalisation, la taille des particules est de préférence entre 0,5 à 10 microns, de préférence encore entre 1 et 10 microns.

Dans des modes de réalisation, les gels de l'invention contiennent de 0,01 à 4.5%, de préférence entre 0,02 et 3%, de préférence encore entre 0,03 et 1%, de manière particulièrement préférée entre 0,04 et 0,8% d'un polysaccharide additionnel ou d'un mélange de polysaccharides additionnels.

Dans des modes de réalisation, le gel contient en outre jusqu'à 10% d'une charge minérale, de préférence jusqu'à 5%, de préférence encore jusqu'à 3%. Cette charge minérale est constituée de silice et/ou d'alumine et/ou d'argile et/ou de kaolin et/ou d'un sel minéral. L'homme de l'art sait utiliser cette charge minérale pour ajuster certaines propriétés physiques du gel comme la viscosité, le temps de séchage et le pH. Par exemple, l'optimisation d'un ratio silice/alumine est particulièrement intéressante pour épaissir le gel lorsque celui-ci contient des solvants polaires.

Dans des modes de réalisation, les particules de silice sont des silices de synthèse et sont nanométriques. Par exemple, on peut utiliser de la silice Aerosil® 200 (Evonik®, marques déposées).

Dans des modes de réalisation, l'alumine est de l'alumine nanométrique Aéroxide AluC® (Evonik, marques déposées).

Dans des modes de réalisation, le sel minéral est, et sans que cette liste ne soit exhaustive, du bicarbonate de sodium, du bicarbonate de calcium, du carbonate de sodium, du carbonate de calcium, du chlorure de calcium, du chlorure de sodium, du carbonate d'ammonium, du dihydrogène phosphate de potassium, de l'hydrogène phosphate de disodium, du sulfate de potassium et d'aluminium.

Les gels aqueux sont préparés en utilisant toute méthode permettant la dispersion des particules dans la (les) phase(s) liquide(s). L'homme de l'art sait utiliser le matériel adapté. De façon préférée, une agitation mécanique est utilisée ; de façon préférée, les solvants organiques non-miscibles à l'eau sont ajoutés à la fin de la préparation mais avant les sels minéraux ; de façon préférée, au moins un solvant miscible à l'eau (entre 1 et 5%) est ajouté au préalable de l'ajout dans le milieu de cellulose microcristalline afin d'éviter la formation d'agglomérats ou grumeaux.

Dans des modes de réalisation, les agents de traitement sont introduits avec l'eau en solution ou en suspension dans l'eau.

Dans des modes de réalisation, les agents de traitement sont introduits avec un solvant organique en solution ou en suspension dans ce solvant organique.

Dans des modes de réalisation, les agents de traitement sont introduits à la toute fin de la préparation du gel.

Les gels aqueux ainsi obtenus présentent des propriétés rhéologiques qui leur permettent de ne pas couler lorsqu'ils sont appliqués sur les surfaces verticales avec les techniques classiques de l'homme de l'art. Le gel de l'invention est suffisamment robuste :
- pour être appliqué en extérieur, dans une large gamme de conditions climatiques
- pour être appliqué avec de nombreuses techniques, par exemple et sans être exhaustif, pinceau, et/ou pistolet airless (en français « sans air ») et/ou rouleau, au platoir, etc. Le gel peut également être employé sur une lingette préalablement imprégnée.

Selon un deuxième objet, la présente invention vise un procédé de traitement de surface comprenant l'application d'un gel à base aqueuse selon l'invention sur ladite surface.

Ce procédé comporte au moins une étape d'application sur la surface à traiter d'un gel objet de la présente invention, suivi d'un temps de contact, d'une éventuelle action mécanique (à doser en fonction du matériau à traiter), et d'un éventuel rinçage aqueux (à doser de la même manière).

Dès lors, les gels aqueux de l'invention utilisés pour le traitement des surfaces, peuvent en outre contenir un ou plusieurs agents de traitements adaptés et ce jusqu'à 10%, de préférence jusqu'à 5%, de préférence encore jusqu'à 2%. L'agent de traitement peut être une substance active ou un mélange de substances actives sous forme neutre ou sous forme de sel. La nature de cet agent de traitement est variée, il peut également s'agir, et sans que cette liste ne soit exhaustive, d'un acide, d'une base, d'un agent biocide.

Selon un troisième objet, la présente invention vise un procédé de protection d'une surface comprenant l'application d'un gel selon l'invention. A la différence des traitements antérieurs, notre solution ne requiert pas la présence d'un surfactant.

De façon surprenante, certains gels aqueux objets de la présente invention permettent de protéger une surface des graffitis. Ainsi, le graffiti déposé sur la surface protégée est retiré complétement ou en grande partie par un lavage à l'eau sans pression. Ce lavage à l'eau est sans effet si le gel de prévention n'a pas été appliqué préalablement au dépôt du graffiti. Ces résultats sont détaillés plus loin dans le texte.

Le retrait de la partie résiduelle du graffiti peut être obtenu par un traitement avec le gel décrit ultérieurement, avec des conditions mécaniques et de rinçage que l'homme du métier sait adapter.

Selon un quatrième aspect, la présente invention vise un procédé de décapage d'une surface, comportant au moins une étape d'application sur la surface à décaper d'un gel objet de la présente invention, suivi d'un temps de contact, d'une éventuelle action mécanique (à doser en fonction du matériau à traiter), et d'un rinçage aqueux (à doser de la même manière). Il n'est pas nécessaire que la surface ait été traitée avec le gel de protection précédemment décrit pour que ce procédé de décapage soit efficace.

Dans des modes de réalisation, le gel peut en outre contenir jusqu'à 1% d'un agent surfactant non ionique. C'est, par exemple, un polymère comportant des chaines éthoxy et propyloxy ; de façon préférentielle on choisit le surfactant dans la gamme pluronic de BASF (marques déposées) ; par exemple le surfactant est du PE 6200 (marque déposée). L'utilisation de gels présentant peu ou pas de surfactant est également un élément fort de notre invention d'un point de vue environnemental.

Par exemple certains gels de l'invention permettent d'éliminer un graffiti sur une surface solide. On considère qu'un graffiti est éliminé d'une surface quand on ne décèle plus de trace de ce graffiti à 1m de la surface. On entend par trace à la fois un résidu de graffiti mais également tout autre impact résiduel, en particulier de pénétration dans le matériau.

L'état de séchage final du gel avant retrait du résidu de traitement est très important ; en effet, si le gel sèche complétement (c'est-à-dire jusqu'à former des paillettes 'farineuse'), l'action est très faible, voire nulle. Dans des conditions très humides (c'est-à-dire au moins 70 % d'hygrométrie relative), un séchage partiel menant à des écailles translucides permet une action satisfaisante des gels. De préférence, le temps de 'séchage complet' est supérieur au temps d'action nécessaire du gel ; l'homme du métier sait adapter le nombre de réapplications éventuelles du gel pour parvenir à cette configuration. On entend par réapplication une application supplémentaire de gel.

En outre, et de façon tout à fait inattendue, certains gels présentent une stabilité de plus d'un mois, voire de plusieurs mois. La stabilité des gels obtenus permet d'envisager leur application dans différents secteurs (pharmacie, cosmétique, alimentaire). En effet, ces gels aqueux, permettant de disperser de manière stable de l'huile dans une phase aqueuse offrent une alternative intéressante aux solutions existantes, en particulier pour leur compatibilité potentielle avec des principes actifs à délivrer dans les deux premiers domaines.

Dans des modes de réalisation, le gel contient au moins 20% d'un ou d'un mélange de composé(s) organique(s) liquide(s) non miscible(s) à l'eau.

Dans des modes de réalisation le gel peut contenir jusqu'à 1% d'un ou d'un mélange de surfactants non ioniques.

Dans des modes de réalisation l'agent de traitement est un ou des principe(s) actif(s).

On note qu'aucun des gels décrits en exemple ne contient de produits classés cancérigènes mutagènes reprotoxiques (CMR) ou sensibilisant à la date du dépôt et au sens de la réglementation européenne (EC) N°1272/2008. L'homme de l'art sait choisir les solvants et adapter les formulations, si nécessaire, en fonction de l'évolution de la réglementation en vigueur.

### BREVE DESCRIPTION DES FIGURES

D'autres avantages, buts et caractéristiques particulières de la présente invention ressortiront de la description non limitative qui suit d'au moins un mode de réalisation particulier des procédés et gels objets de la présente invention, en regard des dessins annexés, dans lesquels :
- la figure 1 représente, sous forme d'un logigramme, des étapes d'un mode de réalisation particulier du procédé de décapage d'une surface,
- la figure 2 représente, sous forme d'un logigramme, des étapes d'un mode de réalisation particulier du procédé de protection d'une surface et

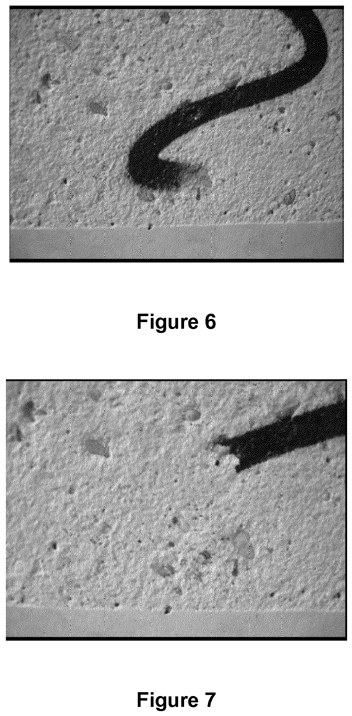

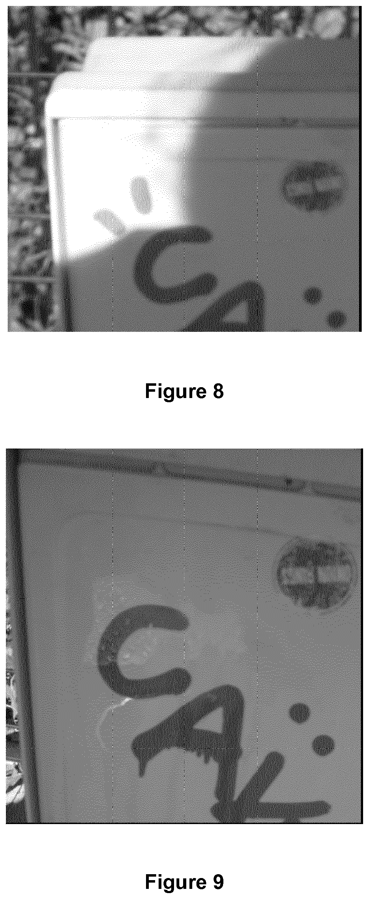

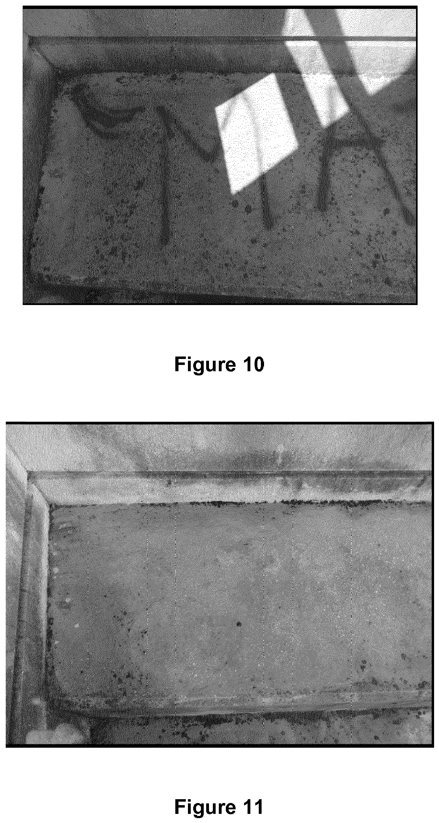

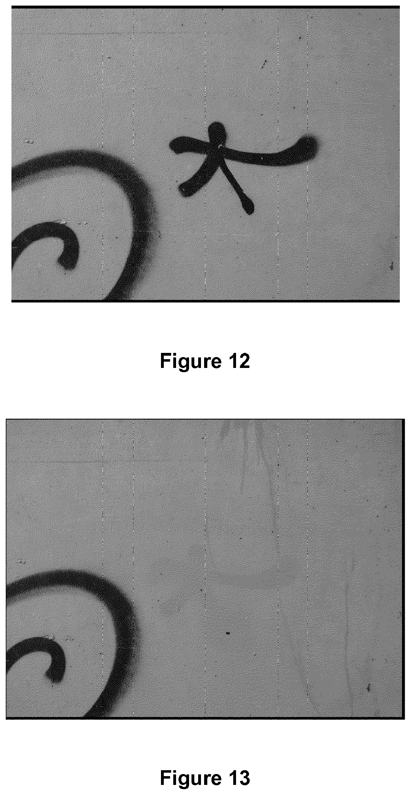

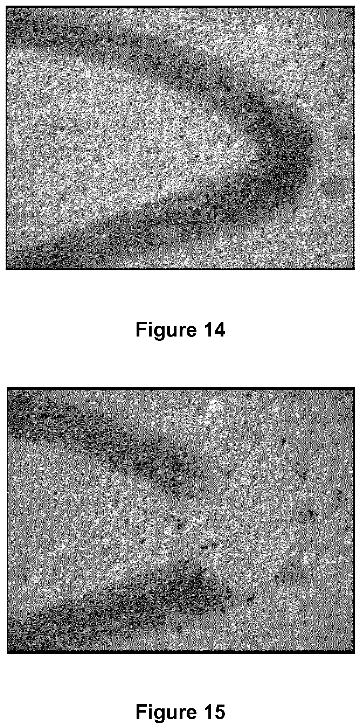

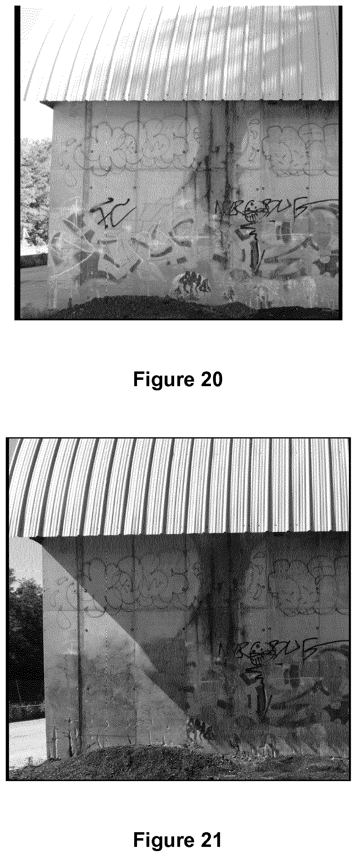

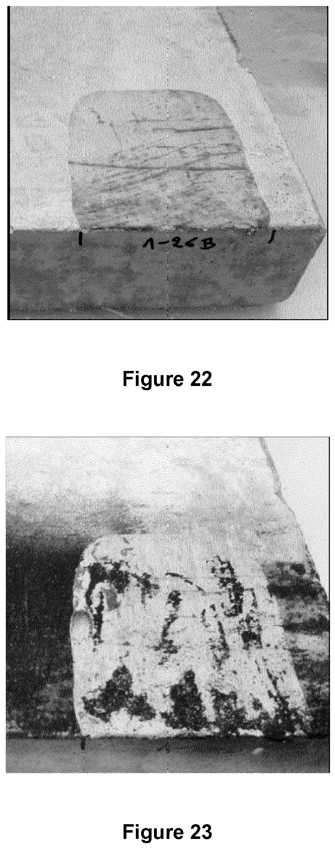

- les figures 3 à 23 représentent, sous forme de photographies, les résultats obtenus suite à la mise en œuvre des différents gels de l'invention selon les procédés de l'invention (photos avant/après).

### DESCRIPTION D'EXEMPLES DE REALISATION DE L'INVENTION

L'invention sera mieux comprise si on s'en réfère aux exemples qui suivent.

La présente description est donnée à titre non limitatif, chaque caractéristique d'un mode de réalisation pouvant être combinée à toute autre caractéristique de tout autre mode de réalisation de manière avantageuse.

Les mesures de viscosité ont été réalisées avec un rhéomètre AR 2000 ex (TA Instruments, marques déposées).

Les mesures de pH ont été réalisées avec un pHmètre BA 350 série S3 (EDT Instruments, marques déposées).

Les mesures de calorimétrie différentielle à balayage ont été réalisées avec un appareil Diamond DSC de Perkin-Elmer, avec le programme de température suivant : chauffage de 30°C à 200°C à 10°C/min sous N2 (20ml/min).

Les stabilités ont été réalisées à température ambiante, c'est-à-dire entre 20°C et 30°C. On considère que le produit est stable lorsqu'on n'observe pas de ressuage ou un ressuage de moins de 5% (soit un ressuage de moins de 5 mm pour des stockages dans des conditionnements haut de 10 cm).

Afin que l'invention soit mieux comprise, les gels présentés sont évalués selon plusieurs critères :
1/ Observation visuelle du gel au repos : émulsion ou biphasique - présence ou non de vacuoles visibles à l'œil - ressuage ou relargage
2/ Comportement du gel à l'écoulement, à l'agitation à la spatule, à l'agitation mécanique
3/ Comportement du gel à l'application au pinceau et au platoir
4/ Rhéologie dynamique et son exploitation en termes de prévision du comportement du gel à l'utilisation :
   Au cours de cette étude, nous avons observé qu'un gel permettant une application sur une surface verticale de 1 à 2 mm aura une viscosité au retour à 10 s-1 supérieure à 0.6 Pa.s, respectivement 1,0 Pa.s.
   Un gel permettant une application sur une surface verticale de 3 à 5 mm aura une viscosité au retour à 10s-1 supérieur à 2.3 Pa.s
5/ Evolution de ces différents paramètres dans le temps.

Le gel de traitement de surface de l'invention est préparé par le chargement successif dans un réacteur muni d'une agitation mécanique de :
- au moins 25% d'eau, de préférence au moins 40% d'eau
- éventuellement jusqu'à 1% de surfactant non ionique
- de 0.5 à 4.5 % de cellulose microcristalline
- de 0.5 à 3% de caséine
- au moins 10%, préférentiellement au moins 20% d'un ou d'un mélange de solvant(s) organique(s) tel que le gel contienne au final :
   - jusqu'à 35% d'un ou plusieurs solvant(s) miscible(s) à l'eau
   - jusqu'à 70%, préférentiellement jusqu'à 60% d'un ou d'un mélange de solvant(s) organique(s) non miscible(s) à l'eau
   - éventuellement jusqu'à 10% d'une charge minérale,
   - éventuellement jusqu'à 10% d'un agent de traitement

Préférentiellement, tout ou partie du ou des solvant(s) organique(s) miscible(s) à l'eau est (sont) introduit(s) au préalable du ou des polysaccharide(s)

Dans des modes de réalisation, les agents de traitement sont introduits avec l'eau en solution et/ou en suspension dans l'eau.

Dans des modes de réalisation, les agents de traitement sont introduits avec un solvant organique en solution et ou en suspension dans ce solvant organique.

Dans des modes de réalisation, les agents de traitement sont introduits à la toute fin de la préparation du gel.

Le gel de décapage de surface de l'invention est préparé par le chargement successif dans un réacteur muni d'une agitation mécanique de :
- au moins 25% d'eau, de préférence au moins 40% d'eau par exemple 51.7%
- éventuellement jusqu'à 1% de surfactant non ionique, par exemple 0.6% d'(EtO)n(PrO)m
- éventuellement jusqu'à 10% d'une charge minérale, , par exemple 0.6% d'alumine et 0.8% d'argile
- de 0.5 à 4.5% de cellulose microcristalline, par exemple 0.8% de cellulose microcristalline
- de 0.5 à 3% de caséine, par exemple 0.8% de caséine
- au moins 10%, préférentiellement au moins 20% d'un ou d'un mélange de solvant(s) organique(s) tel que le gel contienne au final :
- jusqu'à 35% d'un ou d'un mélange de solvant(s) miscible(s) à l'eau, par exemple 3.6% d'éthanol et 3.4% de DMSO
- jusqu'à 70%, préférentiellement jusqu'à 60% d'un ou d'un mélange de solvant(s) organique(s) non miscible(s) à l'eau par exemple 35.1% d'acétate de butyle
- éventuellement le complément de la charge minérale jusqu'à 10% d'un sel minéral
- éventuellement jusqu'à 10% d'un agent de traitement

Préférentiellement, tout ou partie du ou des solvant(s) organique(s) miscible(s) à l'eau est (sont) introduit(s) au préalable du ou des polysaccharide(s).

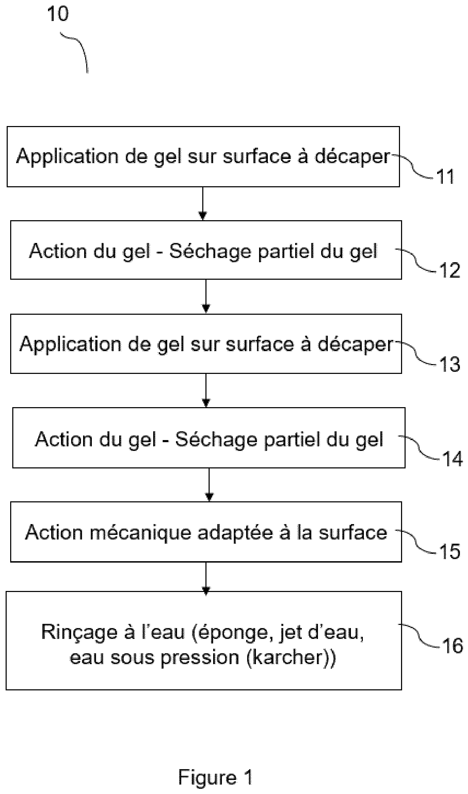

On observe, sur la figure 1, un mode de réalisation particulier 10 du procédé de décapage d'une surface.

Ce mode de réalisation 10 comporte, d'abord, une étape 11 d'application sur la surface à décaper du gel objet de la présente invention.

Le gel de l'invention peut être appliqué par les différentes techniques connues de l'homme de l'art, par exemple et sans que la liste ne soit exhaustive au pinceau, ou au rouleau ou au pulvérisateur sans air (« airless » en anglais), par exemple de type Wagner (marque déposée) W95 ou W180 P ou Graco Eurospray 60 sur batterie, ou Graco A60 (marques déposées), ou Compact 170 Titan (marques déposées) pour les surfaces plus grandes, par exemple de plus de 30 m².

Au cours d'une étape 12, le gel agit chimiquement et sèche partiellement.

Préférentiellement, le procédé 10 comporte une pluralité d'étapes 13 d'application du gel sur la surface à décaper et d'étapes 14 d'action chimique et de séchage partiel du gel, sans laisser sécher complétement le gel entre deux étapes d'application.

Préférentiellement, au cours de chaque étape d'application, on dépose une épaisseur d'environ 0,1 à 5 millimètres, de préférence 0,2 à 2 millimètre sur la surface à décaper. Préférentiellement, le procédé 10 comporte une étape 15 constituée d'une action mécanique adaptée à la surface.

Préférentiellement, le procédé 10 comporte une étape 16 constituée d'un rinçage à l'eau adapté à la surface.

Des procédés d'utilisation des gels pour le décapage des graffitis, adaptés aux supports et aux conditions climatiques sont décrits ultérieurement dans les tableaux. Ces exemples sont donnés de manière non exhaustive.

L'homme de l'art sait transposer ces exemples, et adapter la nature de l'action mécanique (brossage doux ou dur, etc) et/ou la nature du rinçage (éponge, eau sous pression, au karcher (marque déposée), etc) nécessaire. Le gel objet de la présente invention est par ailleurs suffisamment robuste pour être utilisé en extérieur dans une large gamme de conditions climatiques.

Le gel de protection de surface de l'invention est préparé par le chargement successif dans un réacteur muni d'une agitation mécanique de :
- au moins 25% d'eau, de préférence au moins 40% d'eau, par exemple 64%
- au moins 10%, préférentiellement au moins 20% d'un ou d'un mélange de solvant(s) organique(s) tel que le gel contienne au final :
- jusqu'à 35% d'un ou d'un mélange de solvant(s) miscible(s) à l'eau, par exemple 28.2% de DMSO et 4.3% d'éthanol
- jusqu'à 70%, préférentiellement jusqu'à 60% d'un ou d'un mélange de solvant(s) organique(s) non miscible(s) à l'eau
- de 0.5 à 4.5% de cellulose microcristalline, par exemple 2.2% de cellulose microcristalline
- de 0.5 à 3% de caséine, par exemple 1.3% de caséine
- éventuellement jusqu'à 10% d'une charge minérale,
- éventuellement jusqu'à 10% d'un agent de traitement

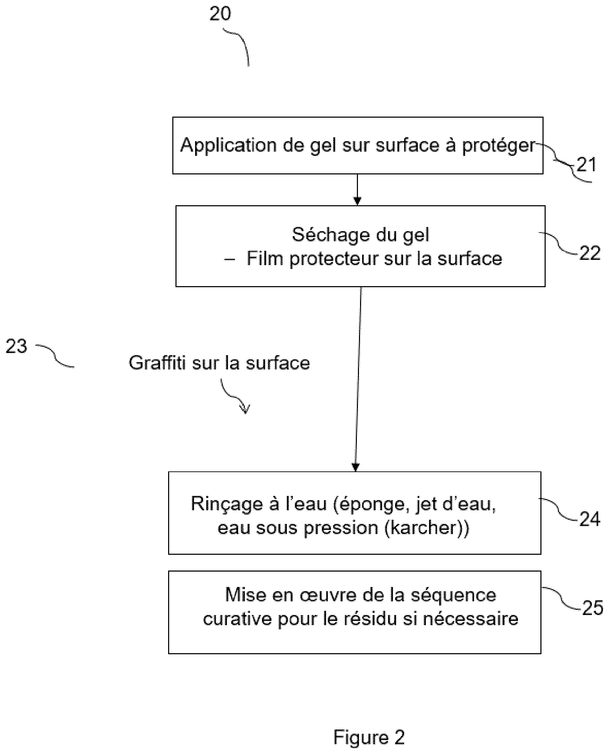

On observe, sur la figure 2, un mode de réalisation particulier 20 du procédé de protection d'une surface.

Dans des modes de réalisation, le procédé comporte une étape d'application 21 du gel sur la surface.

Dans des modes de réalisation, le procédé comporte une étape 22 de séchage du gel sans traitement supplémentaire, ni rinçage.

Dans des modes de réalisation, le procédé comporte une étape d'abandon du gel sec sur la surface.

Dans des modes de réalisation, après la réalisation d'un graffiti sur la surface (étape 23), le procédé comporte une étape 24 de rinçage à l'eau pour permettre l'élimination du graffiti. L'homme de l'art sait, en fonction des matériaux, adapter ce lavage à l'eau, en particulier en termes de pression, de température et de volume d'eau à mettre en œuvre.

De façon surprenante, certaines formulations sont particulièrement stables. Elles peuvent dès lors également être utilisées dans d'autres domaines que le traitement de surfaces (cosmétique, pharmaceutique, etc).

Le gel de l'invention est préparé par le chargement successif dans un réacteur muni d'une agitation mécanique de :
- au moins 25% d'eau, de préférence au moins 40% d'eau, par exemple 58%
- éventuellement jusqu'à 1% d'un surfactant non ionique
- de 0.5 à 3% de caséine, par exemple 1.2%
- jusqu'à 35% d'un ou d'un mélange de solvant(s) organique(s) miscible(s) à l'eau, par exemple 3.8% d'éthanol
- de 0.5 à 4.5% de cellulose microcristalline dont les particules dispersées sont en moyenne inférieure à 100 micromètres et dont toutes les dimensions sont en moyenne supérieures à 100 nanomètres, par exemple 2%
- au moins 20% et jusqu'à 70%, préférentiellement jusqu'à 60% d'un composé organique liquide non miscible à l'eau, par exemple un solvant organique non miscible à l'eau, par exemple 35% d'acétate de butyle
- éventuellement jusqu'à 10% d'une charge minérale,
- éventuellement jusqu'à 10% d'un agent de traitement

Dans des modes de réalisation, les agents de traitement sont introduits avec l'eau en solution et/ou en suspension dans l'eau.

Dans des modes de réalisation, les agents de traitement sont introduits avec le composé organique liquide en solution et/ou en suspension dans ce composé organique liquide. Dans des modes de réalisation, les agents de traitement sont introduits à la fin de la préparation du gel.

### EXEMPLE 1 - Des émulsions stables au repos et à l'application pendant au moins un mois.

### Gel 1-19

| | % poids |
|---|---|
| Eau déminéralisée | 33.7 |
| AcOEt | 60.6 |
| Alumine | 2.7 |
| Silice de synthèse | 3.0 |
| Total | 100 |

Dans un bécher de 400ml, on charge 120 ml d'AcOEt, 60 ml d'eau, on observe deux belles phases. On ajoute l'Alu C 4.74 g. L'alumine est complétement en phase aqueuse (dessous). Puis on commence à ajouter la silice. A 4.61 g on observe la formation d'un gel, bien qu'encore liquide. On rajoute encore jusqu'à 5.46 g de silice, afin d'avoir la texture souhaitée.

Au bout de 3 jours, ce gel a démixé et ne peut être repris par agitation.

Ajout de PE 6200 (2g) puis reprise du gel par ajout d'eau, jusqu'à obtention d'une formule contenant 45% d'eau. (En considérant que l'évaporation de AcOEt sur l'ensemble des opérations est nulle, ce qui surestime AcOEt résiduel).

### Gel 1-33

| | % poids |
|---|---|
| Eau déminéralisée | 45.6 |
| AcOEt | 49.2 |
| (EtO)n(PrO)m | 1 |
| Silice de synthèse | 2.6 |
| Alumine | 1.6 |
| Total | 100 |

Procédé (dit procédé liquides puis poudres) : chargement de l'eau, AcOEt, PE6200 puis agents viscosants inorganiques
Gel instable - Ressuage en quelques heures.

Fabrication le 29/09/2015 - le 6/11/2015, le gel a complétement démixé et ne peut être repris par agitation vigoureuse du pot fermé.

### Gel 1-54C

| | % poids |
|---|---|
| Eau déminéralisée | 59,6 |
| DMSO | 17,4 |
| AcOEt | 17,4 |
| (EtO)n(PrO)m | 1 |
| Silice de synthèse | 3,5 |
| Alumine | 1,1 |
| Total | 100 |

Procédé (dit procédé liquides puis poudres) : chargement de l'eau, DMSO, PE6200, AcOEt puis agents viscosants inorganiques
Gel instable - Ressuage en quelques heures - Au bout de 4 jours, le gel se déstructure lors de l'application au pinceau.

### Gels 1-90/1-91/1-92

Procédé (dit procédé mayonnaise) : chargement de l'eau, de PE 6200 de la silice puis du

| | % poids | | |
|---|---|---|---|
| | 1-90 | 1-91 | 1-92 |
| Eau déminéralisée | 49 | 49 | 48 |
| (EtO)n(PrO)m | 0.5 | 0.5 | 0.5 |
| Silice de synthèse | 3.5 | 3.5 | 3.0 |
| AcOBu | 47 | - | - |
| AcOEt | - | 47 | 48.5 |
| Total | 100 | 100 | 100 |

solvant organique. Très beaux gels. Pas de ressuage immédiat.

### Gel 1-93B

| | % poids |
|---|---|
| Eau déminéralisée | 46.2 |
| (EtO)n(PrO)m | 0.5 |
| Silice de synthèse | 2.3 |
| Cellulose microcristalline | 0.5 |
| AcOEt | 46 |
| DMSO | 4.5 |
| Total | 100 |

Procédé (dit procédé mayonnaise) : chargement de l'eau, de PE 6200 de la silice, de cellulose microcristalline puis de AcOBu. Très beau gel. Pas de ressuage rapide.

### Gel TG 4-04 selon l'invention

| | % poids |
|---|---|
| Eau déminéralisée | 51.7 |
| Pluronic® PE6200 (tensioactif) | 0.6 |
| argile | 0.8 |
| Silice de synthèse | 2.6 |
| Alumine | 0.6 |
| caséine | 0.8 |
| Cellulose microcristalline | 0.8 |
| EtOH | 3.6 |
| AcOBu | 35.1 |
| DMSO | 3.4 |
| Total | 100 |

Gel thixotrope - gel pulvérisable avec le pulvérisateur airless W180P

Gel stable - Pas de ressuage en quelques heures - Au bout de deux mois, le gel n'a pas changé d'allure.

### Gel TG4-25 selon l'invention

| | % poids |
|---|---|
| Eau déminéralisée | 58 |
| caséine | 1,2 |
| Arbocel | 2,0 |
| EtOH | 3.8 |
| AcOBu | 35 |
| Total | 100 |

### Stabilité comparée des gels

| Référence cahier de labo | Composition | Ressuage important (>20%) en qqs heures | Stabilité à l'application | Stabilité dans le temps à 20°C |
|---|---|---|---|---|
| 1-19 | Eau + solvant miscibles : 33% | oui | non | < 3 jours |
| | Silice de synthèse + Alumine : 5.7% | | | |
| | Solvant non miscible (AcOEt) : | | | |
| | 60% | | | |
| 1-33 | Eau + solvant miscibles : 45% | oui | non | < 1 mois et demi |
| | Silice de synthèse + Alumine : 4.2% | | | |
| | Solvant non miscible (AcOEt) : 49% | | | |
| | Tensioactif 1% | | | |
| 1-54C | Eau + solvant miscibles : 77% | oui | Non (déstructuration application pinceau) | |
| | Silice de synthèse + Alumine : 4.6% | | | |
| | Solvant non miscible (AcOEt) : 17.4% | | | |
| | Tensioactif 1% | | | |
| 1-90/1-91/1-92 | Eau + solvant miscibles : 49% | non | Non (déstructuration application pinceau) | |
| | Silice de synthèse: 3.5% | | | |
| | Solvant non miscible (AcOBu) : 47% | | | |
| | Tensioactif 0.5% | | | |
| 1-93B | Eau + solvant miscibles : 50.7% | non | Oui au pinceau mais se fluidifie fortement avec la température | < 1 mois et demi |
| | Silice de synthèse: 2.3% | | | |
| | Solvant non miscible (AcOEt) : 46% | | | |
| | Tensioactif 0.5% | | | |
| | + Cellulose microcristalline 0.5% | | | |
| TG 4-04 | Eau + solvant miscibles : 58.7% | non | Oui, pinceau et pistolet airless (Wagner W 180P) | >1 mois et demi >7 mois |
| Gel selon l'inventio n | Silice de synthèse + Alumine + argile : 4.0% | | | |
| | Solvant non miscible (AcOBu) : 35.1% | | | |
| | Tensioactif 0.6% | | | |
| | + Cellulose microcristalline 0.8% + caséine 0.8% | | | |
| TG 4-25 | Eau + solvant miscibles : 61.8% | non | Oui, pinceau et pistolet airless (Wagner W 180P) | >1 mois et demi >7 mois |
| Gel selon l'inventio n | Solvant non miscible (AcOBu) : 35% | | | |
| | + Cellulose microcristalline 2.0% + caséine 1.2% | | | |
| 9-20B | Eau + solvant miscibles : 55.9% | non | Application 0.5 cm au platoir sur surfaces verticales sans formation de vacuoles | >1 mois et demi |
| Gel selon l'inventio n | Silice de synthèse + Alumine + argile : 3.4% | | | |
| | Solvant non miscible (AcOBu) : 35.8% | | | |
| | Tensioactif 0.4% | | | |
| | + Cellulose microcristalline 1.2% + caséine 1.2%+ sulfate de calcium 2.1% | | | |
| TG 720 | Eau + solvant miscibles : 75.8% | non | Oui, pinceau et pistolet airless (Wagner W 180P) | >7 mois |
| Gel selon l'inventio n | Silice de synthèse + Alumine + argile : 3.4% | | | |
| | Solvant non miscible (BDGA) : 17.9% | | | |
| | Tensioactif 0.5% | | | |
| | + Cellulose microcristalline 1.2% + caséine 1.2% | | | |
| 9-17D | Eau + solvant miscibles : 41% | non | Application 0.5 cm au platoir sur surfaces verticales sans formation de vacuoles | >1 mois et demi |
| Gel selon l'inventio n | Silice de synthèse + Alumine + argile : 1.5% | | | |
| | Solvant non miscible (BDGA) : 53.1% | | | |
| | Tensioactif 0.4% + Cellulose microcristalline 0.7% + caséine 1.1% + chlorure de calcium 2.2% | | | |

### EXEMPLE 2 - Nécessité du couple cellulose microcristalline et caséine pour former les gels de l'invention

### Composition des gels

| | % poids | | | | | |
|---|---|---|---|---|---|---|
| | TG 4-25 | 4-28A | 4-28B | 4-96C | 4-96A | 4-96B |
| Eau déminéralisée | 58 | 59 | 57.5 | 57.1 | 60.4 | 58.7 |
| Caséine | 1.2 | 2.1 | 4.2 | - | - | 1.3 |
| Cellulose microcristalline | 2.0 | - | | 2.1 | 2.2 | 2.2 |
| EtOH | 3.8 | 3.9 | 3.8 | 3.5 | - | - |
| AcOBu | 35 | 35 | 34.5 | 37.3 | 37.4 | 37.8 |
| Total | 100 | 100 | 100 | 100 | 100 | 100 |

| | | | | | | |
|---|---|---|---|---|---|---|
| 4-28A et 4-28B, après une agitation de 10 minutes, forment une émulsion qui démixe en moins de 2 minutes. | | | | | | |

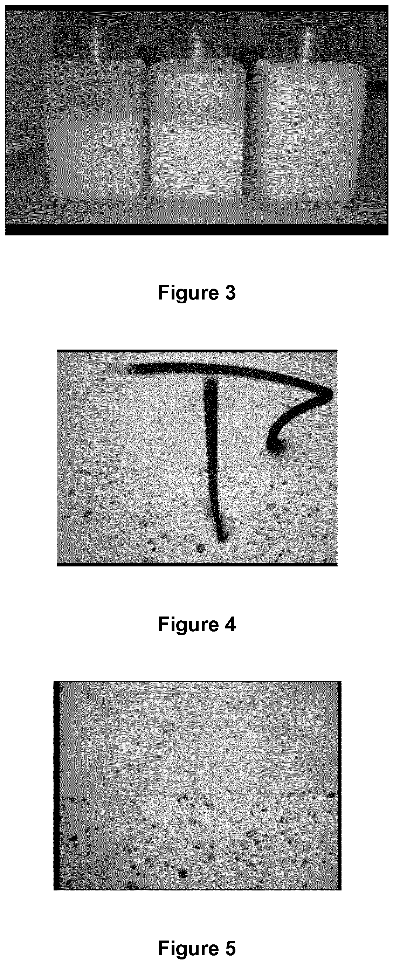

Sur la Fig. 3, on voit respectivement les milieux 4-96C, 4-96A et 4-96B immédiatement après la mise en oeuvre : Pas de formation de gel et démixage immédiat lors de l'ajout de l'acétate de butyle en l'absence de caséine.

### EXEMPLE 3 - Des gels de l'invention peu dosés en solvant pour les surfaces très délicates

| | % poids | |
|---|---|---|
| | 4-15 | TG 720 |
| Eau déminéralisée | 57 | 72,8 |
| (EtO)n(PrO)m | 0,5 | 0,5 |
| Argile | 0,7 | 0,7 |
| Silice de synthèse | 1,9 | 2,2 |
| Alumine | 0,5 | 0,5 |
| Caséine | 0,7 | 1,2 |
| Cellulose microcristalline | 0,7 | 1.2 |
| EtOH | 3 | 3.0 |
| butyldiglyco lacetate | 31,7 | 17,9 |
| DMSO | 3,3 | - |
| Total | 100 | 100 |

| | | Viscosité, en Pa.s | | | | |
|---|---|---|---|---|---|---|
| | | 1s⁻¹ | 10s⁻¹ | 100s⁻¹ | 10s⁻¹ | 1s⁻¹ |
| TG 720 lot 734 | 1 mois | 17.68 | 2.82 | 0.3 | 0.94 | 3.32 |
| | 7 mois | 23.89 | 4.0 | 0.3 | 1.01 | 3.98 |
| TG 720 lot 754 - 88 kg | 9 jours | 18.9 | 3.66 | 0.28 | 0.9 | 3.29 |
| | 4 mois | 24.02 | 4.45 | 0.28 | 1.03 | 4.50 |

### EXEMPLE 4 - Des gels de l'invention épais pour les surfaces très incrustées

| | Masse, en g | | | | | | |
|---|---|---|---|---|---|---|---|
| | TG 4-04 | 4-29 | 726 | 9-17B | 4-83 | 9-20A | 9-20B |
| Eau déminéralisée | 51,7 | 51,7 | 61,2 | 61,2 | 57.1 | 57.1 | 57.1 |
| (EtO)n(PrO)m | 0,6 | 0,6 | 0,5 | 0,5 | 0.4 | 0.4 | 0.4 |
| Argile | 0,8 | 0,8 | 0,7 | 0,7 | 0.7 | 0.7 | 0.7 |
| Silice de synthèse | 2,6 | 2,6 | 2,7 | 2,7 | 2.3 | 2.3 | 2.3 |
| Alumine | 0,6 | 0,6 | 0,4 | 0,4 | 0.5 | 0.5 | 0.5 |
| Caséine | 0,8 | 0,8 | 1,2 | 1,2 | 1.2 | 1.2 | 1.2 |
| Cellulose microcristalline | 0,8 | 0,8 | 0.8 | 0.8 | 1.2 | 1.2 | 1.2 |
| EtOH | 3,6 | 3,6 | 3.1 | 3.1 | | | |
| AcOBu | 35,1 | 35,1 | 27.0 | 27.0 | 36.6 | 36.6 | 36.6 |
| DMSO | 3,4 | 3,4 | 2.4 | 2.4 | | | |
| CaCl2 | | 2.2 | | 2.2 | | 1.8 | |
| CaSO4 | | | | | | | 2.1 |
| Total | 100 | 102.2 | 100 | 102.2 | 100 | 101.8 | 102.1 |

| | | | | | | | |
|---|---|---|---|---|---|---|---|
| Rq : L'ajout de silice dans TG 4-25 conduit à la déstructuration rapide du gel. L'ajout de CaCl2 provoque le même résultat. L'ajout de sulfate de calcium blanchit le gel mais ne l'épaissit pas. | | | | | | | |

| | | Viscosité, en Pa.s | | | | |
|---|---|---|---|---|---|---|
| | | 1s⁻¹ | 10s⁻¹ | 100s⁻¹ | 10s⁻¹ | 1s⁻¹ |
| TG 4-04 lot 6-15 | 14 mois | 20.20 | 2.98 | 0.34 | 1.55 | 7.47 |
| 4-29 | 14 mois | 32.13 | 6.02 | 0.67 | 3.58 | 16.63 |
| 726 -22 kg | 1 mois | 16,35 | 2,82 | 0,25 | 0,78 | 2,67 |
| | 7 mois | 13.2 | 2.01 | 0.22 | 0.64 | 2.01 |
| 9-17B | | 23.04 | 3.98 | 0.44 | 2.36 | 9.33 |
| 4-83 | 2 mois | 25.015 | 4.43 | 0.44 | 1.44 | 5.26 |
| 9-20A | | 28.78 | 6.54 | 0.88 | 2.67 | 6.90 |
| 9-20B | | 29.87 | 5.69 | 0.47 | 2.83 | 18.73 |

### EXEMPLE 5 -_Des gels de l'invention épais et comprenant jusqu'à 55% de solvant pour les surfaces très incrustées

### Ces gels sont particulièrement utiles en été.

| | Masse en g | | |
|---|---|---|---|
| | 4-15 | TG4-78 | 9-17D |
| Eau déminéralisée | 57 | 42.0 | 42.0 |
| (EtO)n(PrO)m | 0,5 | 0.4 | 0.4 |
| Argile | 0,7 | 0.2 | 0.2 |
| Silice de synthèse | 1,9 | 1.1 | 1.1 |
| Alumine | 0,5 | 0.2 | 0.2 |
| Caséine | 0,7 | 1.1 | 1.1 |
| Cellulose microcristalline | 0,7 | 0.7 | 0.7 |
| EtOH | 3 | - | - |
| butyldiglyco lacetate | 31,7 | 54.3 | 54.3 |
| DMSO | 3,3 | - | - |
| CaCl₂ | | | 2.2 |
| Total | 100 | 100 | 102.2 |

TG 4-78 a besoin d'être remélangé de façon mécanique pour être utilisé. 9-17D est préparé à partir de 4-78 lot 887 4 mois.

| | | Viscosité, en Pa.s | | | | |
|---|---|---|---|---|---|---|
| | | 1s⁻¹ | 10s⁻¹ | 100s⁻¹ | 10s⁻¹ | 1s⁻¹ |
| TG 4-78 - lot 887 - 5kg | 4 mois | 25.37 | 4.0 | 0.52 | 3.0 | 20.73 |
| 9-17D | | 24.82 | 3.86 | 0.79 | 2.85 | 17.01 |

### EXEMPLE 6- Stabilité dans le temps des propriétés physiques des gels de l'invention

### TG4-25

Le gel TG 4-25 est un gel qui ne change pas d'aspect au cours du temps, qui ne présente pas de vacuoles visibles, qui ne démixe pas à l'écoulement, ni lors de l'application au pinceau. Ces propriétés rhéologiques sont par ailleurs également stables :

| | | Viscosité, en Pa.s | | | | |
|---|---|---|---|---|---|---|
| | | 1s⁻¹ | 10s⁻¹ | 100s⁻¹ | 10s⁻¹ | 1s⁻¹ |
| Lot 741 - 22 kg | 5j | 7.9 | 2.58 | 0.52 | 1.4 | 3.55 |
| | 3 mois | 9.85 | 2.97 | 0.58 | 1.83 | 5.66 |
| Lot 724 - 22 kg | 0 jours | 5,5 | 1,7 | 0,49 | 1,27 | 2,6 |
| | 17 jours | 8,11 | 2,48 | 0,47 | 1,26 | 3,19 |
| | 1 mois | 8,6 | 2,42 | 0,48 | 1,33 | 3,45 |
| | 2 mois | 9,33 | 2,9 | 0,55 | 1,62 | 4,55 |
| | 4 mois | 11 | 3,02 | 0,57 | 1,71 | 5,17 |
| | 8 mois | 10.28 | 3.39 | 0.63 | 1.98 | 6.40 |
| Lot 751 - 88 kg | 2j | 11,95 | 3.28 | 0.49 | 1.43 | 3.91 |
| | 4 mois | 12.07 | 3.66 | 0.55 | 1.83 | 6.04 |
| 726 | | | | | | |

| | | Viscosité, en Pa.s | | | | |
|---|---|---|---|---|---|---|
| | | 1s⁻¹ | 10s⁻¹ | 100s⁻¹ | 10s⁻¹ | 1s⁻¹ |
| 726 -22 kg | 1 mois | 16,35 | 2,82 | 0,25 | 0,78 | 2,67 |
| | 7 mois | 13.2 | 2.01 | 0.22 | 0.64 | 2.01 |

### TG 720

Le gel TG 720 est un gel qui ne change pas d'aspect au cours du temps, qui ne présente pas de vacuoles visibles, qui ne démixe pas à l'écoulement, ni lors de l'application au pinceau. Ces propriétés rhéologiques sont par ailleurs également stables:

| | | Viscosité, en Pa.s | | | | |
|---|---|---|---|---|---|---|
| | | 1s⁻¹ | 10s⁻¹ | 100s⁻¹ | 10s⁻¹ | 1s⁻¹ |
| lot 734 | 1 mois | 17.68 | 2.82 | 0.3 | 0.94 | 3.32 |
| | 7 mois | 23.89 | 4.0 | 0.3 | 1.01 | 3.98 |
| lot 754 - 88 kg | 9 jours | 18.9 | 3.66 | 0.28 | 0.9 | 3.29 |
| | 4 mois | 24.02 | 4.45 | 0.28 | 1.03 | 4.50 |

### TG 4-78

Le gel TG 4-78 est un gel qui ne change pas d'aspect au cours du temps, qui ne présente pas de vacuoles visibles, mais qui démixe partiellement à l'écoulement, et lors de l'application au platoir. Il est donc nécessaire de l'agiter de façon mécanique avant utilisation (type agitateur à peinture). Ces propriétés rhéologiques sont alors retrouvées:

| | | Viscosité, en Pa.s | | | | |
|---|---|---|---|---|---|---|
| | | 1s⁻¹ | 10s⁻¹ | 100s⁻¹ | 10s⁻¹ | 1s⁻¹ |
| TG 4-78 - lot 887 - 5kg | 4 mois | 25.37 | 4.0 | 0.52 | 3.0 | 20.73 |

### 4-29

Le gel 4-29 est un gel qui ne change pas d'aspect au cours du temps, qui ne présente pas de vacuoles visibles, qui ne démixe pas à l'écoulement, ni lors de l'application au pinceau ou au platoir. Ces propriétés rhéologiques sont par ailleurs également stables :

| | | Viscosité, en Pa.s | | | | |
|---|---|---|---|---|---|---|
| | | 1s⁻¹ | 10s⁻¹ | 100s⁻¹ | 10s⁻¹ | 1s⁻¹ |
| 4-29 | 14 mois | 32.13 | 6.02 | 0.67 | 3.58 | 16.63 |

### EXEMPLE 7 - GEL 1-93B - Décapage de graffiti

Ce produit est un gel beige à blanc dont les principales caractéristiques physiques sont reprises dans le tableau ci-dessous.

| Viscosité, en Pa.s | | | | | pH apparent |
|---|---|---|---|---|---|
| à 1 s⁻¹ | à 10 s⁻¹ | à 100 s⁻¹ | à 10 s⁻¹ | à 1 s⁻¹ | |
| 5,41 | 0,76 | 0,13 | 1.2 | 7.01 | 6,3 |

Exemple d'utilisation du gel 1-93B - Le gel a été utilisé dans des conditions très humides (Humidité Relative de 80 à 90%). Dans l'exemple, la température est de l'ordre de 20°C (température lors du dépôt du gel).

| Matériaux | Nature du graffiti | Etapes du procédé 10 (Fig. 1) de réalisation du décapage | Retrait du graffiti | Figures associées |
|---|---|---|---|---|
| Béton peu poreux lisse ou brut | peinture | 11 Application du gel au pinceau sur la surface | oui | Fig. 4 Fig. 5 |
| | | 12 Action chimique du gel 3 h | | |
| | | 13 Nouvelle application au pinceau | | |
| | | 14 Action chimique 19h | | |
| | | 15 Brossage doux | | |
| | | 16 Rinçage à l'éponge humide | | |

Si le gel sèche complètement, il n'est plus efficace.

Il est donc nécessaire de retirer le gel avant qu'il ne soit complétement sec.

Un temps d'action court du gel, et inférieur au temps de séchage quel que soit les conditions météorologiques, permet de s'affranchir de ces dernières. Il est par ailleurs beaucoup plus adapté aux contraintes de réalisation des entreprises, en particulier lorsqu'il s'agit, dans une ville de retirer une trentaine de tags par jours à plusieurs endroits différents.

### EXEMPLE 8 - GEL TG4-04 - Décapage de graffiti

Ce produit est un gel beige à blanc dont les principales caractéristiques physiques sont reprises dans le tableau qui suit. Le premier événement observé par DSC sur la plage 30-200°C se situe à 92°C. Ceci démontre que le gel TG4-04 peut être utilisé dans des conditions extrêmes en été.

| Viscosité, en Pa.s | | | | | | | |
|---|---|---|---|---|---|---|---|
| à 1 s⁻¹ | à 10 s⁻¹ | à 100 s⁻¹ | à 10 s⁻¹ | à 1 s⁻¹ | pH apparent | T° du premier événement observé en DSC | Stabilité du gel (visuel) |
| 15,65 | 3,61 | 0,43 | 1.77 | 6.85 | 6,9 | 92°C | >3 mois |

Exemples d'utilisation du gel TG4-04 - Le gel a été utilisé en extérieur dans des conditions (Humidité Relative de 20 à 60%), pour des températures de 20 °C à 40°C.

| Matériaux | Nature du graffiti | Etapes du procédé 10 (fig. 1) de réalisation du décapage | Retrait du graffiti | Figures associées |
|---|---|---|---|---|
| Béton peu poreux lisse ou brut | Peinture | 11 Application du gel au pinceau sur la surface | oui | Fig. 6 Fig. 7 |
| | | 12 Action chimique du gel 3 mn | | |
| | | 15 Brossage au pinceau | | |
| | | 16 Rinçage à l'éponge humide | | |
| Plastique | Peinture | 11 Application du gel au pinceau sur la surface | oui | Fig. 8 Fig. 9 |
| | | 12 Action chimique du gel 3 mn | | |
| | | 15 Brossage au pinceau | | |
| | | 16 Rinçage à l'éponge humide | | |
| Béton vieilli | Peinture spray | 11 Application du gel au pinceau sur la surface | oui | Fig. 10 Fig. 11 |
| | | 12 Action chimique du gel 5 mn | | |
| | | 15 Action à la brosse métallique | | |
| | | 16 Rinçage à l'eau sous pression | | |
| Béton peint | Peinture | 11 Application du gel au pinceau | oui | Fig. 12 |
| | spray | sur la surface 12 Action chimique du gel 3 mn 15 Brossage au pinceau 16 Rinçage à l'éponge humide | | Fig. 13 |

### EXEMPLE 9 - GEL TG4-25 - Décapage de graffiti

Ce produit est un gel beige à blanc dont les principales caractéristiques physiques sont reprises dans le tableau ci-dessous.

| Viscosité, en Pa.s | | | | | | |
|---|---|---|---|---|---|---|
| à 1 s⁻¹ | à 10 s⁻¹ | à 100 s⁻¹ | à 10 s⁻¹ | à 1 s⁻¹ | pH apparent | Stabilité du gel (visuel) |
| 18,97 | 3,3 | 0,55 | 1.84 | 6.67 | 5,9 | > 1 mois |

Exemple d'utilisation du gel TG4-25 - Le gel a été utilisé en extérieur dans des conditions (Humidité Relative 60%), pour des températures d'environ 30°C.

| Matériaux | Nature du graffiti | Procédé 10 de réalisation du décapage | Retrait du graffiti | Figures associées |
|---|---|---|---|---|
| Béton brut poreux | Peinture spray | 11 Application du gel au pinceau sur la surface | oui | Fig. 14 Fig. 15 |
| | | 12 Action chimique du gel 5 mn | | |
| | | 15 Brossage au pinceau | | |
| | | 16 Rinçage à l'éponge humide | | |

### EXEMPLE 10 - GEL 4-15 - Décapage de graffiti

Ce produit est un gel beige à blanc dont les principales caractéristiques physiques sont reprises dans le tableau ci-dessous.

| Viscosité, en Pa.s | | | | | | |
|---|---|---|---|---|---|---|
| à 1 s⁻¹ | à 10 s⁻¹ | à 100 s⁻¹ | à 10 s⁻¹ | à 1 s⁻¹ | pH apparent | Stabilité du gel (visuel) |
| 1,9 | 0,41 | 0,11 | 0.41 | 0.94 | 6,3 | >1 mois |

### Exemple d'utilisation du gel 4-15

| Matériaux | Nature du graffiti | Etape du procédé 10 (Fig. 1) de réalisation du décapage | Retrait du graffiti | Figures associées |
|---|---|---|---|---|
| Surface métallique peinte | Peinture spray | 11 Application du gel au pinceau sur la surface | oui | Fig. 16 Fig. 17 |
| | | 12 Action chimique instantanée | | |
| | | 16 Rinçage à l'éponge humide | | |

### EXEMPLE 11 - GEL TG720 - Décapage de graffiti sur les surfaces délicates

### Exemple d'utilisation du gel TG720

| Matériaux | Nature du graffiti | Etape du procédé 10 (Fig. 1) de réalisation du décapage | Retrait du graffiti | Figures associées |
|---|---|---|---|---|
| Panneau rétro-réfléchissant | Peinture spray | 11 Application du gel avec du papier absorbant | oui | Fig. 18 Fig. 19 |
| | | 12 Action chimique 30 s | | |
| | | 15 Action à la laine métallique | | |
| | | 16 Rinçage à l'éponge humide | | |

### EXEMPLE 12 - GEL 9-20B - Décapage de graffiti sur les surfaces très incrustées

Ce produit est un gel beige à blanc dont les principales caractéristiques physiques sont reprises dans le tableau ci-dessous.

| Viscosité, en Pa.s | | | | | | |
|---|---|---|---|---|---|---|
| à 1 s⁻¹ | à 10 s⁻¹ | à 100 s⁻¹ | à 10 s⁻¹ | à 1 s⁻¹ | pH apparent | Stabilité du gel (visuel) |
| 29.9 | 5.7 | 0.47 | 2.8 | 18.7 | 7.0 | > 1mois |

### Exemple d'utilisation du gel 9-20B

| Matériaux | Nature du graffiti | Etape du procédé 10 (Fig. 1) de réalisation du décapage | Retrait du graffiti | Figures associées |
|---|---|---|---|---|
| Murs en béton graffés depuis plusieurs années | Peinture spray | 11 Application du gel au platoir épaisseur 3 mm | oui | Fig. 20 Fig. 21 |
| | | 12 Action chimique 15 min | | |
| | | 15 Action à la brosse métallique | | |
| | | 16 Rinçage à l'eau sous | | |
| | | pression | | |

### EXEMPLE 13 - GEL 4-41 - Gel pour les surfaces délicates utilisé après imprégnation d'une lingette

Le gel est préparé par l'addition des différents ingrédients mentionnés dans le tableau ci-dessous en terminant par les solvants.

| | % poids |
|---|---|
| Eau déminéralisée | 58.7 |
| Caséine | 1.3 |
| Cellulose microcristalline | 2.1 |
| EtOH | 1.0 |
| butyldiglyco lacétate | 36.9 |
| Total | 100 |

Ce produit est un gel beige à blanc dont les principales caractéristiques physiques sont reprises dans le tableau ci-dessous.

| Viscosité, en Pa.s | | | | | pH apparent | Stabilité du gel (visuel) |
|---|---|---|---|---|---|---|
| à 1 s⁻¹ | à 10 s⁻¹ | à 100 s⁻¹ | à 10 s⁻¹ | à 1 s⁻¹ | | |
| 10.3 | 2.5 | 0.46 | 1.26 | 3.53 | 7.0 | > 1mois |

### EXEMPLE 14 - GEL 4-26B - Protection de surface anti-graffiti

Le gel est préparé par l'addition des différents ingrédients en terminant par les solvants.

| | % poids |
|---|---|
| Eau déminéralisée | 64 |
| Caséine | 1,3 |
| Cellulose microcristalline | 2.2 |
| EtOH | 4.3 |
| DMSO | 28.2 |
| Total | 100 |

Ce produit est un gel beige à blanc dont les principales caractéristiques physiques sont reprises dans le tableau ci-dessous.

| Viscosité, en Pa.s | | | | | pH apparent | Stabilité du gel (visuel) |
|---|---|---|---|---|---|---|
| Viscosité à 1 s⁻¹ | Viscosité à 10 s⁻¹ | Viscosité à 100 s⁻¹ | Viscosité à 10 s⁻¹ | Viscosité à 1 s⁻¹ | | |
| 5,65 | 0,7 | 0,17 | 0.39 | 0.62 | 6,4 | > 1mois |

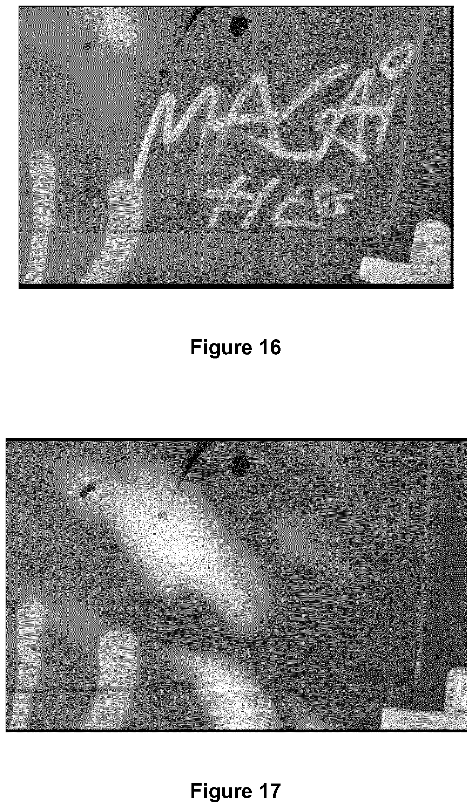

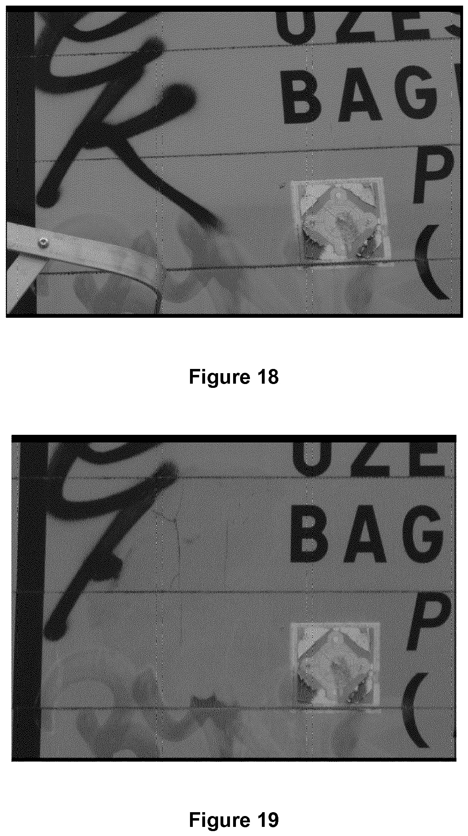

Exemple d'utilisation du gel 4-26B - La figure 17 représente la surface après le dépôt du gel, la figure 18 après le rinçage à l'eau de la surface.

| Matériaux | Nature du graffiti | Etapes du procédé 20 (Fig. 2) de réalisation de la protection | Retrait du graffiti | Figures associées |
|---|---|---|---|---|
| Béton | Peinture spray | 21 Application du gel au pinceau sur la surface 22 Séchage du gel 23 Graffiti 24 Rinçage à l'éponge humide | oui | Fig. 22 Fig. 23 |

### EXEMPLE 15- GEL 9-38 - Protection de surface anti-graffiti

Le gel est préparé par l'addition des différents ingrédients en terminant par les solvants.

| | % poids |
|---|---|
| Eau déminéralisée | 58.7 |
| Caséine | 1.4 |
| Cellulose microcristalline | 2.1 |
| Huile de lin | 37.2 |
| Carbonate d'ammonium | 0.6 |
| Total | 100 |

Ce produit est un gel beige à blanc dont les principales caractéristiques physiques sont reprises dans le tableau ci-dessous.

| Viscosité, en Pa.s | | | | | | |
|---|---|---|---|---|---|---|
| à 1 s⁻¹ | à 10 s⁻¹ | à 100 s⁻¹ | à 10 s⁻¹ | à 1 s⁻¹ | pH apparent | Stabilité du gel (visuel) |
| 7.75 | 2.38 | 0.48 | 1.57 | 5.32 | 8.0 | ≥ 1 mois |

### EXEMPLE 16 - GEL 9-37 - Gel de traitement des poux

Le traitement par de l'huile alimentaire des cheveux infestés par les poux est une technique qui a été couramment utilisée.

La mise en forme de gel permet d'éviter d'avoir des coulures, et en particulier dans les yeux ; le rinçage à l'eau de l'huile est par ailleurs facilité par cette formulation.

| | % poids |
|---|---|
| Eau déminéralisée | 71.2 |
| Caséine | 1.6 |
| Cellulose microcristalline | 2.7 |
| Huile alimentaire | 24.5 |
| Total | 100 |

Ce produit est un gel beige à blanc dont les principales caractéristiques physiques sont reprises dans le tableau ci-dessous.

| Viscosité, en Pa.s | | | | | pH apparent | Stabilité du gel (visuel) |
|---|---|---|---|---|---|---|
| à 1 s⁻¹ | à 10 s⁻¹ | à 100 s⁻¹ | à 10 s⁻¹ | à 1 s⁻¹ | | |
| 10.1 | 3.1 | 0.6 | 1.5 | 4.34 | 7.0 | > 1mois |

## Revendications

1. Gel à base aqueuse possédant un pH apparent compris entre 5 et 9 **caractérisé en ce qu'**il comprend :
- 10 à 70 % en poids par rapport au poids total du gel d'au moins un solvant organique et/ou une huile organique
- 0,5 à 4,5% en poids par rapport au poids total du gel de cellulose microcristalline
- 0,5 à 3% en poids par rapport au poids total du gel de caséine et
- au moins 25% en poids par rapport au poids total du gel d'eau.

2. Gel à base aqueuse selon la revendication 1 **caractérisé en ce que** les particules de cellulose microcristalline sont en moyenne inférieures à 100 micromètres et dont toutes les dimensions sont en moyenne supérieures à 100 nanomètres.

3. Gel selon la revendication 1 ou 2, comprenant en outre jusqu'à 10% de charge minérale.

4. Gel selon la revendication 3, la charge minérale comprenant de la silice.

5. Gel selon l'une quelconque des revendications précédentes dans lequel le solvant organique est choisi parmi :
- des alcools, par exemple le méthanol, l'éthanol, le 2-propanol, le 2-éthylhexanol, le butyl glycol, le tert-amyl alcool, le 1-butanol, le 2-butanol, le glycerol, le N-pentanol, le butyl diglycol
- des cétones, telles l'acétone, la Méthyl Ethyl Cétone (MEC), la cyclohexanone
- des solvants soufrés tels le DiMéthyl SulfOxyde (DMSO) et le sulfolane
- des éthers, tels le 1,3-dioxolane, le Méthyl Ter-Butyl Éther (MTBE), l'éther diéthylique, le butyl diglycol éther
- des esters par exemple l'acétate d'éthyle, l'acétate de butyle, l'acétate d'isobutyle, l'acétate d'isoamyle, le butylglycolacétate, le butyldiglycolacétate, l'acétate de 2-ethylhexyle, le diglycol, le 2-(1-methoxy)-propylacétate, le glycerol triacétate, le succinate de diméthyle, le glutarate de diméthyle, l'adipate de diméthyle
- des alcanes, par exemple le squalane, l'heptane, l'hexane, le cyclohexane ou des mélanges tels l'essence pour voiture, le diesel, le kerosène
- des solvants chlorés, par exemple le dichlorométhane
et leurs mélanges.

6. Gel selon l'une quelconque des revendications précédentes comprenant en outre jusqu'à 1% de surfactant non ionique.

7. Gel selon l'une quelconque des revendications précédentes comprenant en outre un ou plusieurs polysaccharide(s) additionnel(s), de préférence choisi parmi l'hémicellulose, la pectine, la lignine, les gommes, l'amidon, la fécule, la dextrine, la carboxyméthylcellulose, en particulier la carboxyméthylcellulose sodique.

8. Gel selon la revendication 7, comprenant de la carboxyméthylcellulose sodique.

9. Gel selon l'une quelconque des revendications précédentes présentant un pH apparent compris entre 6 et 8.

10. Gel selon l'une quelconque des revendications précédentes comprenant au moins 40% d'eau.

11. Procédé de traitement de surface comprenant l'application d'un gel à base aqueuse selon l'une quelconque des revendications précédentes sur ladite surface.

12. Procédé selon la revendication 11 de nettoyage d'une surface, de préférence pour éliminer des graffiti.

13. Procédé selon la revendication 11 ou 12 de décapage d'une surface, comportant au moins une étape d'application sur la surface à décaper d'un gel selon l'une quelconque des revendications 1 à 10, suivie d'un temps de contact, d'une éventuelle action mécanique et d'un rinçage aqueux.

14. Procédé de traitement selon la revendication 11 de protection préventive de surface.

## Patentansprüche

1. Gel auf wässriger Basis mit einem augenscheinlichen pH-Wert zwischen 5 und 9, **dadurch gekennzeichnet, dass** es:
- 10 bis 70 % Gewichtsanteil in Bezug auf das Gesamtgewicht des Gels von mindestens einem organischen Lösungsmittel und/oder einem organischen Öl
- 0,5 bis 4,5 % Gewichtsanteil in Bezug auf das Gesamtgewicht des Gels an mikrokristalliner Cellulose
- 0,5 bis 3 % Gewichtsanteil in Bezug auf das Gesamtgewicht des Gels an Casein und
- mindestens 25 % Gewichtsanteil in Bezug auf das Gesamtgewicht des Gels an Wasser enthält.

2. Gel auf wässriger Basis nach Anspruch 1, **gekennzeichnet dadurch, dass** die mikrokristallinen Cellulosepartikel durchschnittlich unter 100 Mikrometer groß und deren gesamte Ausmaße durchschnittlich über 100 Nanometer groß sind.

3. Gel nach Anspruch 1 oder 2, ferner aufweisend bis zu 10 % mineralischem Füllstoff.

4. Gel nach Anspruch 3, der mineralische Füllstoff Kieselerde aufweisend.

5. Gel nach irgendeinem der vorhergehenden Ansprüche, wobei das organische Lösungsmittel ausgewählt ist aus:
- Alkoholen, zum Beispiel Methanol, Ethanol, 2-Propanol, 2-Ethylhexanol, Butylglykol, tert. Amylalkohol, 1-Butanol, 2-Butanol, Glycerol, N-Pentanol, Butyldiglykol
- Ketonen, wie Aceton, Methyl-Ethyl-Keton (MEK), Cyclohexanon
- schwefelhaltigen Lösungsmitteln wie Dimethylsulfoxid (DMSO) und Sulfolan
- Ether, wie 1,3-Dioxolan, Methyl-tert-butylether (MTBE), Diethylether, Butyldiglycolether
- Estern, zum Beispiel Ethylacetat, Butylacetat, Isobutylacetat, Isoamylacetat, Butylglycolacetat, Butyldiglycolacetat, 2-Ethylhexylacetat, Diglycol, 1-Methoxy-2-propylacetat, Glyceroltriacetat, Dimethylsuccinat, Dimethylglutarat, Dimethyladipat
- Alkanen, zum Beispiel Squalan, Heptan, Hexan, Cyclohexan oder Mischungen wie Benzin für Autos, Diesel, Kerosin
- Chlorhaltigen Lösungsmitteln, zum Beispiel
Dichlormethan, und deren Mischungen.

6. Gel nach irgendeinem der vorhergehenden Ansprüche, ferner aufweisend bis zu 1 % nichtionisches Tensid.

7. Gel nach irgendeinem der vorangegangenen Ansprüche, ferner aufweisend ein oder mehrere zusätzliche Polysaccacharide, vorzugsweise ausgewählt unter Hemicellulose, Pektin, Lignin, Gummen, Stärkemehl, Kartoffelstärke, Dextrin, Carboxymethylcellulose, insbesondere Natriumcarboxymethylcellulose.

8. Gel nach Anspruch 7, Natriumcarboxymethylcellulose aufweisend.

9. Gel, das nach irgendeinem der vorangegangenen Ansprüche über einen augenscheinlichen pH-Wert zwischen 6 und 8 verfügt.

10. Gel nach irgendeinem der vorangegangenen Ansprüche, mindestens 40 % Wasser aufweisend.

11. Oberflächenbehandlungsverfahren, welches das Auftragen eines Gels auf wässriger Basis auf die besagte Oberfläche beinhaltet, gemäß irgendeinem der vorangegangenen Ansprüche.

12. Reinigungsverfahren von Oberflächen nach Anspruch 11, vorrangig für die Entfernung von Graffitis.

13. Oberflächenabbeizverfahren nach Anspruch 11 oder 12, der mindestens eine Etappe des Auftragens eines Gels auf die abzubeizende Oberfläche beinhaltet, nach irgendeinem der Ansprüche 1 bis 10, gefolgt von einem Einwirkungszeitraum, einem eventuellen mechanischen Einwirken und einem wässrigen Spülvorgang.

14. Vorbeugendes Oberflächenschutzbehandlungsverfahren nach Anspruch 11.

## Claims

1. Aqueous gel with an apparent pH between 5 and 9 **characterised in that** it comprises:
- 10 to 70 % by weight in relation to the total weight of the gel of at least one organic solvent and/or organic oil
- 0.5 to 4.5 % by weight in relation to the total weight of the gel of microcrystalline cellulose
- 0.5 to 3 % by weight in relation to the total weight of the gel of casein and
- at least 25 % by weight in relation to the total weight of the gel of water.

2. Aqueous gel according to claim 1 **characterised in that** the microcrystalline cellulose particles are on average smaller than 100 micrometres and of which all the dimensions are on average bigger than 100 nanometres.

3. Gel according to claim 1 or 2, further comprising a mineral load of up to 10%.

4. Gel according to claim 3, the mineral load comprising silica.

5. Gel according to any of the preceding claims in which the organic solvent is chosen from:
- alcohols, for example methanol, ethanol, 2-propanol, 2-ethylhexanol, butyl glycol, tert-amyl alcohol, 1-butanol, 2-butanol, glycerol, N-pentanol, butyl diglycol
- ketones, such as acetone, methyl ethyl ketone (MEK), cyclohexane
- sulphur-containing solvents such as dimethyl sulfoxide (DMSO) and sulfolane
- ethers, such as 1,3-dioxolane, methyl ter-butyl ether (MTBE), diethyl ether, butyl diglycol ether
- esters, for example ethyl acetate, butyl acetate, isobutyl acetate, isoamyl acetate, butylglycol acetate, butyldiglycol acetate, 2-ethylhexyl acetate, diglycol, l-Methoxy-2-propyl acetate, glycerol triacetate, dimethyl succinate, dimethyl glutarate, dimethyl adipate
- alkanes, for example squalane, heptane, hexane, cyclohexane or mixtures such as car petrol, diesel, kerosene
- Chlorinated solvents, for example dichloromethane and mixtures thereof.

6. Gel according to any of the preceding claims further comprising up to 1% of non ionic surfactant.

7. Gel according to any of the preceding claims further comprising one or several additional polysaccharides, preferably selected from hemicellulose, pectin, lignin, gums, starch, starch flour, dextrin, carboxymethyl cellulose, in particular sodium carboxymethyl cellulose.

8. Gel according to claim 7, comprising sodium carboxymethyl cellulose.

9. Gel according to any of the preceding claims having an apparent pH between 6 and 8.

10. Gel according to any of the preceding claims comprising at least 40% water.

11. Surface treatment process comprising application of an aqueous gel according to any of the preceding claims on said surface.

12. Process according to claim 11 for cleaning a surface, preferably for removing graffiti.

13. Process according to claim 11 or 12 for stripping a surface, comprising at least one application step on the surface to be stripped of a gel according to any of claims 1 to 10, followed by a contact time, possible mechanical action, and aqueous rinsing.

14. Treatment process according to claim 11 for preventive surface protection.
